Europäisches Patentamt

European Patent Office

Office européen des brevets

(11) Publication number: **0 089 319**
**B1**

(12) **EUROPEAN PATENT SPECIFICATION**

(45) Date of publication of patent specification: **03.06.87**

(21) Application number: **83830042.4**

(22) Date of filing: **25.02.83**

(51) Int. Cl.⁴: **H 01 F 1/34,** H 01 F 10/24,
C 04 B 35/26

(54) **Method for the production of synthetic calcium-vanadium ferrimagnetic garnets with improved hysteresis characteristics in temperature.**

(30) Priority: **11.03.82 IT 4796882**

(43) Date of publication of application:
**21.09.83 Bulletin 83/38**

(45) Publication of the grant of the patent:
**03.06.87 Bulletin 87/23**

(84) Designated Contracting States:
**DE FR GB NL**

(56) References cited:
**DE-A-2 637 380**
**DE-A-2 745 266**
**US-A-4 213 803**

**PATENT ABSTRACTS OF JAPAN, unexamined applications, E field, vol. 4, no. 48(E-6)(530), April 12, 1980 THE PATENT OFFICE JAPANESE GOVERNMENT, page 142 E 6**

**PATENT ABSTRACTS OF JAPAN, unexamined applications, E field, vol. 4, no. 56 (E-8)(538), April 25, 1980 THE PATENT OFFICE JAPANESE GOVERNMENT, page 70 E 8**

(73) Proprietor: **SELENIA INDUSTRIE ELETTRONICHE ASSOCIATE S.p.A.**
**Via Tiburtina, KM 12.400**
**I-00131 Roma (IT)**

(72) Inventor: **Di Gregorio, Carlo, Dr.**
**Viale I. Maggio 110**
**I-00046 Grottaferrata (Roma) (IT)**

(74) Representative: **Gustorf, Gerhard, Dipl.-Ing.**
**Mühlenstrasse 1**
**D-8300 Landshut (DE)**

Courier Press, Leamington Spa, England.

**Description**

The present invention relates to a method for producing synthetic garnets according to the opening part of claim 1, especially for application in the microwave field.

Such a method is known from patent abstracts of Japan, E-field, Vol. 4, No. 56 (E-8) (538), April 25, 1980. Such synthetic garnets containing Yttrium are used for microwave components. In such applications, the hysteresis characteristic is an important feature. Yttrium and other rare earth have been used. Also, Calcium-Vanadium systems with partial or total substitution of Yttrium and of the other rare earth are known. Such systems, however, offer a pure hysteresis characteristic.

In particular, the remanent magnetisation $4\pi M_r$ as a function of temperature is poor also for those Calcium-Vanadium garnets containing Gadolinium, which, however, present a satisfying temperature behaviour of the saturation magnetisation $4\pi M_s$. The temperature behaviour of the remanent magnetization $4\pi M_r$, is still poor.

Therefore, the present invention is based on the object to provide a method for producing a synthetic garnet according to the generic clause of claim 1 showing a good temperature behaviour of the remanent magnetisation.

This object is settled by a garnet according to claim 1. Advantageous developments result from subclaims.

The special advantage results from the use of Cobalt. It is believed that Cobalt is acting with a mechanism called "at single ion" (G. F. Dionne: T. Appl. Phys. 40 (4), 486 (1969)). Cobalt is deemed to be capable of altering the ratio between anisotropy energy and magnetostriction energy. From the altering of this ratio result special advantages. As shown by H.P.T. Wijn et al: Phillips Tech. Rev. 16, 49 (1954)), the hysteresis cycle is poor, if the reatio between anisotropy energy and magnetostriction energy is low. If the ratio is increased, also the hysteresis characteristic improves.

A special advantage of the present invention arises from the fact that the doping of Cobalt also improves the temperature behaviour of the remanent magnetisation, without simultaneously degrading the other microwave characteristics.

Further details, features and advantages of an example of the invention are explained with reference to the drawings.

Herein,

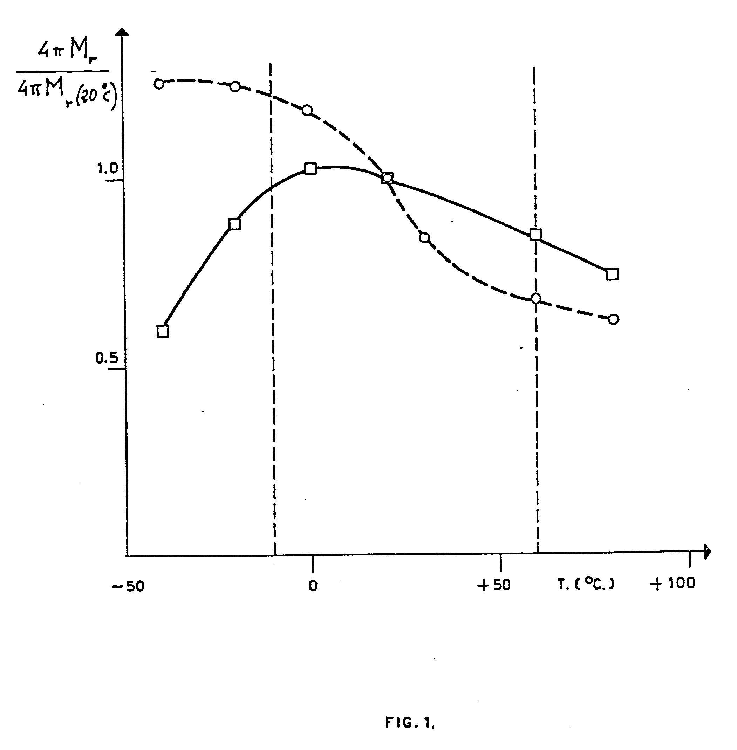

Fig. 1 shows the temperature characteristic of the remanent magnetisation of a garnet produced according to the invention.

For producing such a garnet, high purity fine-grain oxides and carbonates are used as raw materials. The powders are mixed in a ratio with the general formulae:

$$Y_{3-2x-2z}Ca_{2x}Gd_zFe_{5-x-y-c}In_yV_xCo_cO_{12}$$

with

$$0.4 \leq x \leq 1$$
$$0.25 \leq y \leq 0.75$$
$$0 \leq z \leq 2$$
$$0 < c \leq 0.1$$

After doping, the mixture is calcinated and sintered at temperatures between 800°C and 1400°C to obtain the development of the formation reactions of the ferrimagnetic garnet phase and its densification. The pressing of the calcinated powders can be carried out by a hydraulic or isostatic method.

The saturation magnetisation $4\pi M_s$ is between 400 and 800 Gauss at ambient temperature. In Fig. 1, the temperature characteristic of the remanent magnetisation $4\pi M_r$ of such a garnet is shown. As can be derived from Fig. 1, the remanent magnetisation stays at nearly constant values in large temperature ranges. The garnet having the remanent magnetisation temperature characteristic shown in Fig. 1 has a saturation magnetisation of 680 Gauss at ambient temperature.

A garnet according to the invention can be used in phase-shifters, circulators and commutators and other microwave devices which need simultaneously moderate costs, high temperature stability and low losses.

**Claims**

1. Method for producing ferrimagnetic garnets, preferably for application in the microwave field, having a Calcium-Vanadium basis, characterized by doping of Cobalt ions before the forming of the crystalline structure.

2. Method according to claim 1, characterised in that the garnet is composed from

$$Y_{3-2x-2z}Ca_{2x}Gd_zFe_{5-x-y-c}In_yV_xCo_cO_{12}$$

with

# 0 089 319

$$0.4 \leq x \leq 1$$
$$0.25 \leq y \leq 0.75$$
$$0 \leq z \leq 2$$
$$0 < c \leq 0.1$$

## Revendications

1. Procédé pour fabriquer des grenats ferrimagnétiques, de préférence destinée à être utilisés dans le domaine des micro-ondes, à base de calcium-vanadium, caractérisé par un dopage effectué avec des ions de cobalt avant la formation de la structure cristalline.

2. Procédé selon la revendication 1, caractérisé en ce que le grenat est constitué par du

$$Y_{3-2x-2z}Ca_{2x}Gd_zFe_{5-x-y-c}In_yV_xCo_cO_{12}$$

avec

$$0,4 \leq x \leq 1$$
$$0,25 \leq y \leq 0,75$$
$$0 \leq z \leq 2$$
$$0 < c \leq 0,1$$

## Patentansprüche

1. Verfahren zur Herstellung ferrimagnetischer Granate mit Calcium-Vanadium Basis, insbesondere zum Einsatz auf dem Mikrowellensektor, dadurch gekennzeichnet, daß das Kristallwachstum der Kobaltionen gehemmt wird, bevor die kristalline Struktur gebildet wird.

2. Verfahren nach Anspruch 1, dadurch gekennzeichnet, daß das Granat zusammengesetzt ist aus

$$Y_{3-2x-2z}Ca_{2x}Gd_zFe_{5-x-y-c}In_yV_xCo_cO_{12},$$

wobei

$$0,4 \leq x \leq 1$$
$$0,25 \leq y \leq 0,75$$
$$0 \leq z \leq 2$$
$$0 < c \leq 0,1$$

3

FIG. 1.